# EUROPÄISCHE PATENTSCHRIFT

(11) **EP 3 140 250 B1**
(45) Veröffentlichungstag und Bekanntmachung des Hinweises auf die Patenterteilung: **08.03.2023**
(21) Anmeldenummer: 15720973.5
(22) Anmeldetag: 04.05.2015
(51) Int. Cl.: C01B 3/00

(54) **WASSERSTOFFSPEICHER MIT EINEM VERBUNDMATERIAL UND EIN VERFAHREN ZUR HERSTELLUNG**
HYDROGEN STORE COMPRISING A COMPOSITE MATERIAL AND METHOD FOR THE PRODUCTION THEREOF
ACCUMULATEUR D'HYDROGÈNE POURVU D'UN MATÉRIAU COMPOSITE ET PROCÉDÉ DE FABRICATION DUDIT ACCUMULATEUR

(30) Priorität: 05.05.2014 DE 102014006369
(43) Veröffentlichungstag der Anmeldung: 15.03.2017
(73) Patentinhaber: GKN Sinter Metals Engineering GmbH, 42477 Radevormwald (DE)
(72) Erfinder: CASELLAS, Antonio, 53721 Siegburg (DE); DOLLMEIER, Klaus, 73463 Westhausen (DE); ERNST, Eberhard, 36124 Eichenzell (DE); LAUX, Markus, 42477 Radevormwald (DE); WIMBERT, Lars, 58332 Schwelm (DE)
(74) Vertreter: Rössler, Matthias
(86) Internationale Anmeldenummer: PCT/EP2015/059749
(87) Internationale Veröffentlichungsnummer: WO 2015/169766

(56) Entgegenhaltungen:
- EP-A1- 0 632 513
- WO-A1-2007/147260
- WO-A1-2008/148778
- JP-A- S59 219 429
- US-A- 5 360 461

## Beschreibung

Die vorliegende Erfindung betrifft einen Wasserstoffspeicher aufweisend ein Verbundmaterial mit einem hydrierbaren Material sowie ein Verfahren zur Herstellung des Wasserstoffspeichers.

Eine der größeren Herausforderungen im 21. Jahrhundert ist die Bereitstellung von alternativen Energiequellen. Die Ressourcen fossiler Energieträger, wie Erdöl oder Erdgas, sind bekanntermaßen begrenzt. Wasserstoff stellt hier eine interessante Alternative dar. Wasserstoff (H₂) selbst ist zwar keine Energiequelle, sondern muss unter Nutzung anderer Energiequellen zuerst hergestellt werden. Im Gegensatz zu beispielsweise mittels Solarenergie unmittelbar erzeugtem Strom kann Wasserstoff jedoch gespeichert und transportiert werden. Zudem kann Wasserstoff auf unterschiedliche Arten wieder in Energie umgewandelt werden, beispielsweise in einer Brennstoffzelle oder durch direkte Verbrennung. Dabei entsteht als Abfallprodukt lediglich Wasser. Nachteilig beim Umgang mit Wasserstoff ist jedoch, dass er leicht brennbar ist und in Mischung mit Luft hochexplosive Gemische, das sogenannte Knallgas, entstehen.

Eine sichere Speicherung auch für den Transport oder die Lagerung ist damit eine große Herausforderung.

Wasserstoff lässt sich nicht ohne weiteres in einem Wasserstoffspeicher speichern und wieder dann wiedergewinnen, da Wasserstoff die kleinsten Moleküle aller Gase aufweist. US 2006/0030483 A1 beschreibt Mikrohohlkugeln, die Wasserstoffspeicher darstellen sollen. US 2012/0077020 A1 und US 2013/0136684 A1 offenbaren die Verwendung von Kohlenstoff als Matrixmaterial in Wasserstoffspeichern. WO 2008/148778 A1 offenbart eine aufladbare Batterie, in deren Gehäuse ein Sorptionsmittell angeordnet ist. Das Sorptionsmittell dient der Aufnahme von Wasserstoff. Dieses Sorptionsmittell ist eingefasst in eine Polymerschicht. Das Sorptionsmittell umfasst ein Polymer und darin angeordnete Wasserstoffspeichermaterialien . Die Speicherung von Wasserstoff in einer Elektrode einer Batterie ist in DE 60 030 221 T2 erläutert.

Aufgabe der Erfindung ist es, einen Wasserstoffspeicher mit gegenüber dem Stand der Technik verbesserten Eigenschaften zur Verfügung zu stellen, insbesondere mit einer verlängerten Lebensdauer.

Es wird ein Wasserstoffspeicher mit den Merkmalen des Anspruchs 1 sowie ein Verfahren zur Herstellung eines Wasserstoffspeichers mit den Merkmalen des Anspruchs 12 vorgeschlagen. Vorteilhafte Merkmale, Ausgestaltungen und Weiterbildungen gehen aus der nachfolgenden Beschreibung, den Figuren wie auch aus den Unteransprüchen hervor, wobei einzelne Merkmale aus einer Ausgestaltung nicht auf diese beschränkt sind.

Die Erfindung betrifft einen Wasserstoffspeicher aufweisend ein Verbundmaterial mit einem hydrierbaren Material, wobei das Verbundmaterial in einem ersten Bereich zumindest eine Matrix, umfassend wenigstens ein Polymer, aufweist, in die das hydrierbare Material eingebettet ist, und in einem anderen, zweiten Bereich eine oder mehrere Schichten aufweist, wobei wenigstens eine der Schichten eine der folgenden Funktionen als eine Hauptaufgabe in dem zweiten Bereich des Verbundmaterials aufweist: Wasserstoffspeicherung, Wärmeleitung oder Gasdurchführung; wobei der erste und der zweite Bereich miteinander bei Drücken von 500 bis 6000 bar miteinander verpresst sind und einen Verbundbereich bilden.

Weitere Funktionen, die einer Schicht zukommen können, betreffen beispielsweise eine Abstützung beziehungsweise Stabilisierung eines Verbundbereichs in eine oder mehrere Richtungen, eine Nachgiebigkeit, vorzugsweise Elastizität, in eine oder mehrere Richtungen, eine Festigkeit in ein oder mehrere Richtungen, wie auch anderes.

Der Begriff 'Schichten' beschreibt in der vorliegenden Anmeldung, dass vorzugsweise ein Material, aber auch zwei oder mehr Materialien in einer Lage angeordnet sind und diese sich als Lage von einer direkten Umgebung abgrenzen lässt. So können beispielsweise unterschiedliche Materialien nacheinander lose übereinander aufgeschüttet werden, so dass benachbarte Schichten sich unmittelbar berühren. In einer bevorzugten Ausgestaltung kann der Verbundwerkstoff, der das hydrierbare Material umfasst, eine hydrierbare Schicht ausbilden, welche unmittelbar benachbart zu einer wärmeleitfähigen Schicht angeordnet sein kann, so dass die entstehende Wärme bei der Wasserstoffaufnahme und/oder Wasserstoffabgabe von dem hydrierbaren Material direkt an die benachbarte Schicht abgegeben werden kann.

Unter der Schwerpunktmäßigkeit zumindest eine der folgenden Funktionen 'primäre Wasserstoffspeicherung', 'primäre Wärmeleitung' und/oder 'primäre Gasdurchführung' ist zu verstehen, dass die jeweilige Schicht zumindest diese als eine Hauptaufgabe in dem zweiten Bereich des Verbundmaterials wahrnimmt. So ist es möglich, dass eine Schicht primär zur Wasserstoffspeicherung genutzt wird, gleichzeitig aber auch in der Lage ist, eine Wärmeleitfähigkeit zur Verfügung zu stellen. Dabei ist es in einem solchen Fall vorzugsweise vorgesehen, dass zumindest eine andere Schicht vorhanden ist, die primär eine Wärmeleitung übernimmt, das bedeutet, dass über diese Schicht die größte Wärmemenge im Vergleich zu anderen Schichten im Wasserstoffspeicher aus dem verpressten Materialverbund abgeleitet wird. Hierbei kann wiederum die primär gasdurchführende Schicht genutzt werden, durch die zum Beispiel Wasserstoff in den Materialverbund hineingeleitet aber auch zum Beispiel heraus geleitet wird. Hierbei kann über das durchströmende Fluid aber auch Wärme mitgenommen werden. Das durchströmende Fluid im Sinne der vorliegenden Erfindung ist Wasserstoff oder ein Gasgemisch, welches Wasserstoff in einem Anteil von 50 Vol.-% oder mehr, vorzugsweise von 60 Vol.-% oder mehr, insbesondere von 70 Vol.-% oder mehr, bevorzugt von 80 Vol.-% oder mehr, besonders von 90 Vol.-% oder 95 Vol.-% oder mehr aufweist, umfasst. Bevorzugt speichert das hydrierbare Material ausschließlich Wasserstoff, so dass auch bei der Verwendung von Gasgemischen als Fluid im Wesentlichen nur Wasserstoff gespeichert wird.

Eine beispielhafte Ausgestaltung sieht vor, dass eine Wasserstoff speichernde Schicht auf einer Seite eine Schicht mit primärer Gasdurchführung und auf der anderen Seite mit primärer Wärmeleitung aufweist. Auch kann zum Beispiel eine primär Wasserstoff speichernde Schicht auf jeder Seite benachbart sein durch eine primär Wärme leitende Schicht. Ein jeweiliger Schichtverlauf kann bevorzugt parallel zueinander verlaufen. Es kann aber auch zu einer Durchdringung von Schichten kommen. Beispielsweise können Schichten auch in einem Winkel zueinander angeordnet sein. Beispielweise kann eine Schicht senkrecht zu einer anderen Schicht verlaufen, wobei beide Schichten primär gleiche oder verschiedene Schwerpunkte haben.

Der Begriff Wasserstoffspeicher beschreibt einen Vorratsbehälter, in dem Wasserstoff gespeichert werden kann. Dabei können konventionelle Methoden zur Speicherung und Lagerung von Wasserstoff verwendet werden, beispielsweise Druckgasspeicherung, wie Speicherung in Druckbehältern durch Verdichten mit Kompressoren, oder Flüssiggasspeicherung, wie Speicherung in verflüssigter Form durch Kühlung und Verdichten. Weitere alternative Formen der Speicherung von Wasserstoff basieren auf Feststoffen oder Flüssigkeiten, beispielsweise Metallhydridspeichern, wie Speicherung als chemische Verbindung zwischen Wasserstoff und einem Metall beziehungsweise einer Legierung, oder Adsorptionsspeicherung, wie adsorptive Speicherung von Wasserstoff in hochporösen Materialien. Weiterhin sind für Lagerung und Transport von Wasserstoff auch Wasserstoffspeicher möglich, die den Wasserstoff temporär an organische Substanzen binden, wobei flüssige, drucklos speicherbare Verbindungen entstehen, so genannter "chemisch gebundener Wasserstoff".

Wasserstoffspeicher können beispielsweise Metalle oder Metalllegierungen aufweisen, welche mit Wasserstoff unter Ausbildung von Hydriden (Metallhydriden) reagieren. Dieser Vorgang der Wasserstoffspeicherung wird auch als Hydrierung bezeichnet und erfolgt unter Freisetzung von Wärme. Es handelt sich also um eine exotherme Reaktion. Der bei der Hydrierung gespeicherte Wasserstoff kann bei der Dehydrierung wieder abgegeben werden. Hier ist die Zufuhr von Wärme notwendig, da die Dehydrierung eine endotherme Reaktion ist. Ein entsprechender Wasserstoffspeicher kann also zwei Extremzustände aufweisen: 1) das Wasserstoffspeichermaterial ist vollständig mit Wasserstoff beladen. Das Material liegt vollständig in Form seines Hydrids vor; und 2) das Wasserstoffspeichermaterial speicher keinen Wasserstoff, so dass das Material als Metall beziehungsweise Metalllegierung vorliegt.

Ein Wasserstoffspeicher im Sinne der vorliegenden Erfindung umfasst ein Gehäuse sowie ein darin angeordnetes Verbundmaterial, welches die Aufgabe der Wasserstoffspeicherung übernimmt. Darüber hinaus kann das das Verbundmaterial weitere Funktionen aufweisen, die im Folgenden auch beschrieben werden.

Der Begriff 'Verbundmaterial' beschreibt erfindungsgemäß, dass in dem Wasserstoffspeicher verschiedenartige Komponenten verwendet werden, um das hydrierbare Material anzuordnen. Das Verbundmaterial wird aus einzelnen Komponenten, wie einer polymeren Matrix und einzelnen Schichten ausgebildet. Für die Eigenschaften des Verbundmaterials sind stoffliche Eigenschaften und Geometrie der Komponenten von Bedeutung. Das Verbundmaterial ist vorzugsweise kompaktiert.

Der Begriff 'Verbundwerkstoff' beschreibt einen Verbund aus zwei oder mehr Materialien. Hierbei ist ein erstes Material in ein zweites Material, die Matrix, eingebettet. Die Matrix kann offenporig wie auch geschlossen porig sein. Bevorzugt ist die Matrix porös. Durch die Einbettung eines Materials in das andere Material können sich beispielsweise Werkstoffeigenschaften ergänzen, die ansonsten jeweils nur die einzelne Komponente aufweist. Für die Eigenschaften der Verbundwerkstoffe sind stoffliche Eigenschaften und Geometrie der Komponenten von Bedeutung. Insbesondere spielen oft Größeneffekte eine Rolle. Die Verbindung erfolgt zum Beispiel durch Stoff- oder Formschluss oder eine Kombination von beidem. Auf diese Weise kann in der Matrix zum Beispiel eine feste Positionierung des hydrierbaren Materials ermöglicht werden. Das hydrierbare Material ist somit in eine polymere Matrix eingebettet.

Erfindungsgemäß ist es möglich, dass in die polymere Matrix neben dem hydrierbaren Material weitere Komponenten eingebettet sind. Weitere Komponenten, die in die Matrix eingebettet sein können, sind beispielsweise Materialien für die Wärmeleitung und/oder die Gasdurchführung.

Die Matrix kann erfindungsgemäß ein oder mehrere Polymere umfassen und wird daher als polymere Matrix bezeichnet. Ist in der vorliegenden Erfindung eine Matrix beschrieben, so ist hierunter eine polymere Matrix zu verstehen. Die Matrix kann daher ein Polymer oder Mischungen von zwei oder mehr Polymeren umfassen. Bevorzugt umfasst die Matrix nur ein Polymer. Insbesondere kann die Matrix selbst wasserstoffspeichernd sein. So kann zum Beispiel Ethylen (Polyethylen, PE) eingesetzt werden. Bevorzugt wird eine Titan-Ethylen-Verbindung genutzt. Diese kann gemäß einer bevorzugten Ausgestaltung bis zu 14 Gew.-% Wasserstoff speichern.

Der Begriff Polymer beschreibt eine chemische Verbindung aus Ketten- oder verzweigten Molekülen, sogenannte Makromoleküle, die wiederum aus gleichen oder gleichartigen Einheiten, den sogenannten konstitutionellen Repetiereinheiten oder Wiederholeinheiten, bestehen. Synthetische Polymere sind in der Regel Kunststoffe.

Durch die Verwendung mindestens eines Polymers können durch die Matrix dem Material gute optische, mechanische, thermische und/oder chemische Eigenschaften zugewiesen werden. Beispielsweise kann der Wasserstoffspeicher durch das Polymer eine gute Temperaturbeständigkeit, eine Resistenz gegenüber das umgebende Medium (Oxidationsbeständigkeit, Korrosionsbeständigkeit), eine gute Leitfähigkeit, eine gute Wasserstoffaufnahme- und -speicherfähigkeit oder andere Eigenschaften, wie beispielsweise eine mechanische Festigkeit, aufweisen, welche sonst ohne das Polymer nicht möglich wären.

Es können auch Polymere zum Einsatz kommen, die zum Beispiel keine Speicherung von Wasserstoff aber dafür eine hohe Dehnung ermöglichen, wie beispielsweise Polyamid oder Polyvinylacetate.

Erfindungsgemäß kann das Polymer ein Homopolymer oder ein Copolymer sein. Copolymere sind Polymere, die aus zwei oder mehr verschiedenartigen Monomereinheiten zusammengesetzt sind. Copolymere, die aus drei verschiedenen Monomeren bestehen, nennt man Terpolymere. Erfindungsgemäß kann das Polymer beispielsweise auch ein Terpolymer umfassen.

Bevorzugt weist das Polymer (Homopolymer) eine Monomereinheit auf, die vorzugsweise neben Kohlenstoff und Wasserstoff weiterhin wenigstens ein Heteroatom, ausgewählt aus Schwefel, Sauerstoff, Stickstoff und Phosphor aufweist, so dass das erhaltene Polymer im Gegensatz beispielsweise zu Polyethylen nicht vollständig unpolar ist. Bevorzugt ist das Polymer ein Copolymer und/oder ein Terpolymer, in welchem wenigstens eine Monomereinheit neben Kohlenstoff und Wasserstoff weiterhin wenigstens ein Heteroatom, ausgewählt aus Schwefel, Sauerstoff, Stickstoff und Phosphor aufweist. Dabei ist es möglich, dass auch zwei oder mehr Monomereinheiten ein entsprechendes Heteroatom aufweisen.

Das Polymer weist bevorzugt hinsichtlich des Wasserstoffspeichermaterials adhäsive Eigenschaften auf. Dies bedeutet, dass es am Wasserstoffspeichermaterial selbst gut haftet und damit eine Matrix ausbildet, die auch unter Belastungen, wie sie während der Wasserstoffspeicherung auftreten, stabil am Wasserstoffspeichermaterial haften.

Die adhäsiven Eigenschaften des Polymers ermöglichen ein stabiles Einbringen des Materials in einen Wasserstoffspeicher und das Positionieren des Materials an einer definierten Stelle im Wasserstoffspeicher über einen möglichst langen Zeitraum, also über mehrere Zyklen der Wasserstoffspeicherung und Wasserstoffabgabe hinweg. Ein Zyklus beschreibt dabei den Vorgang einer einmaligen Hydrierung und anschließenden Dehydrierung. Dabei sollte das Wasserstoffspeichermaterial bevorzugt über wenigstens 500 Zyklen, insbesondere über wenigstens 1000 Zyklen stabil sein, um das Material wirtschaftlich einsetzen zu können. Stabil im Sinne der vorliegenden Erfindung bedeutet, dass die Menge an Wasserstoff, die gespeichert werden kann, und die Geschwindigkeit, mit der der Wasserstoff gespeichert wird, auch nach 500 beziehungsweise 1000 Zyklen im Wesentlichen den Werten zu Beginn des Einsatzes des Wasserstoffspeichers entspricht. Insbesondere bedeutet stabil, dass das hydrierbare Material an der Position innerhalb des Wasserstoffspeichers gehalten wird, an der es ursprünglich in den Speicher eingebracht wurde.

Das hydrierbare Material der vorliegenden Erfindung ist in einer bevorzugten Ausführungsform ein Niedertemperaturwasserstoffspeichermaterial. Bei der Wasserstoffspeicherung, welche ein exothermer Prozess ist, treten daher Temperaturen von bis zu 150 °C auf. Ein Polymer, welches zur Matrix eines entsprechenden Wasserstoffspeichermaterials eingesetzt wird, muss bei diesen Temperaturen stabil sein. Ein bevorzugtes Polymer zersetzt sich daher nicht bis zu einer Temperatur von 180 °C, insbesondere bis zu einer Temperatur von 165 °C, insbesondere von bis zu 145 °C.

Insbesondere ist das Polymer ein Polymer, welches einen Schmelzpunkt von 100 °C oder mehr, insbesondere von 105 °C oder mehr, aber weniger als 150 °C, insbesondere von weniger als 140 °C, besonders von 135°C oder weniger aufweist. Bevorzugt beträgt die Dichte des Polymers, bestimmt gemäß ISO 1183 bei 20 °C, 0,7 g/cm³ oder mehr, insbesondere 0,8 g/cm³ oder mehr, bevorzugt 0,9 g/cm³ oder mehr jedoch maximal 1,3 g/cm³, bevorzugt nicht mehr als 1,25 g/cm³, insbesondere 1,20 g/cm³ oder weniger. Die Zugfestigkeit nach ISO 527 liegt vorzugsweise im Bereich von 10 MPa bis 100 MPa, insbesondere im Bereich von 15 MPa bis 90 MPa, besonders bevorzugt im Bereich von 15 MPa bis 80 MPa. Das Zug-E-Modul nach ISO 527 liegt bevorzugt im Bereich von 50 MPa bis 5000 MPa, insbesondere im Beriech von 55 MPa bis 4500 MPa, besonders bevorzugt im Bereich von 60 MPa bis 4000 MPa. Überraschenderweise hat sich gezeigt, dass Polymere mit diesen mechanischen Eigenschaften besonders stabil und gut zu verarbeiten sind. Insbesondere ermöglichen sie einen stabilen Zusammenhalt zwischen der Matrix und dem darin eingebetteten hydrierbaren Material, so dass das hydrierbare Material über mehrere Zyklen hinweg lange an der gleichen Position innerhalb des Wasserstoffspeichers bleibt. Hierdurch wird eine lange Lebensdauer des Wasserstoffspeichers ermöglicht.

Besonders bevorzugt im Sinne der vorliegenden Erfindung ist das Polymer ausgewählt aus EVA, PMMA, EEAMA sowie Mischungen dieser Polymere.

Mit EVA (Ethylvinylacetat) wird eine Gruppe von Copolymeren aus Ethylen und Vinylacetat bezeichnet, welche einen Anteil von Vinylacetat im Bereich von 2 Gew.-% bis 50 Gew.-% aufweisen. Geringere Anteile an Vinylacetat führen zur Ausbildung von harten Filmen, während höhere Anteile zu einer größeren Adhäsivität des Polymers führen. Typische EVA sind bei Raumtemperatur fest und weisen eine Zugdehnung von bis zu 750% auf. Zudem sind EVA spannungsrissbeständig. EVA weist die folgende allgemeine Formel (I) auf:

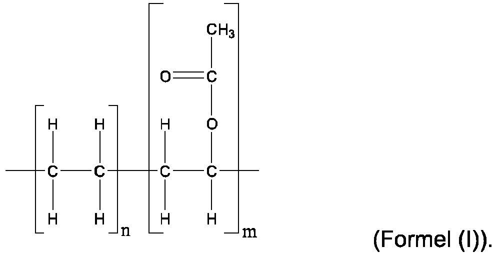

EVA im Sinne der vorliegenden Erfindung weist bevorzugt eine Dichte von 0,9 g/cm³ bis 1,0 g/cm³ (nach ISO 1183) auf. Die Streckspannung nach ISO 527 liegt insbesondere bei 4 bis 12 MPa, bevorzugt im Bereich von 5 MPa bis 10 MPa, besonders von 5 bis 8 MPa. Insbesondere geeignet sind solche EVA, welche eine Zugfestigkeit (nach ISO 527) von mehr als 12 MPa, insbesondere mehr als 15 MPa, und weniger als 50 MPa, insbesondere weniger als 40 MPa, besonders von 25 MPa oder weniger aufweisen. Die Reißdehnung (nach ISO 527) liegt insbesondere bei >30% oder >35%, besonders bei >40% oder 45%, bevorzugt bei >50%. Dabei liegt der Zug-E-Modul bevorzugt im Bereich von 35 MPa bis 120 MPA, besonders von 40 MPa bis 100 MPa, bevorzugt von 45 MPa bis 90 MPa, insbesondere von 50 MPa bis 80 MPa. Geeignete EVA werden beispielsweise von der Firma Axalta Coating Systems LLC unter dem Handelsnamen Coathylene^{®} CB 3547 vertrieben.

Polymethylmethacrylat (PMMA) ist ein synthetischer, transparenter, thermoplastischer Kunststoff mit der folgenden allgemeinen Struktuformel (II):

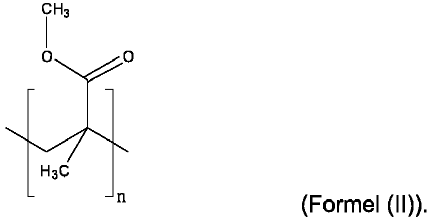

Die Glasübergangstemperatur liegt abhängig von der Molmasse bei etwa 45 °C bis 130°C. Die Erweichungstemperatur beträgt bevorzugt 80 °C bis 120 °C, insbesondere 90 °C bis 110 °C. Das thermoplastische Copolymer zeichnet sich durch seine Beständigkeit gegenüber Witterung, Licht und UV-Strahlung aus.

PMMA im Sinne der vorliegenden Erfindung weist bevorzugt eine Dichte von 0,9 bis 1,5 g/cm³ (nach ISO 1183), insbesondere von 1,0 g/cm³ bis 1,25 g/cm³ auf. Insbesondere geeignet sind solche PMMA, welche eine Zugfestigkeit (nach ISO 527) von mehr als 30 MPa, bevorzugt von mehr als 40 MPa, insbesondere mehr als 50 MPa, und weniger als 90 MPa, insbesondere weniger als 85 MPa, besonders von 80 MPa oder weniger aufweisen. Die Reißdehnung (nach ISO 527) liegt insbesondere bei <10%, besonders bei <8%, bevorzugt bei <5%. Dabei liegt der Zug-E-Modul bevorzugt im Bereich von 900 MPa bis 5000 MPa, bevorzugt von 1200 bis 4500 MPa, insbesondere von 2000 MPa bis 4000 MPa. Geeignete PMMA werden beispielsweise von der Firma Ter Hell Plastics GmbH, Bochum, Deutschland, unter dem Handelsnamen 7M Plexiglas^{®} Granulat angeboten.

EEAMA ist ein Terpolymer aus Ethylen-, Acrylester- und Maleinsäureanhydrid-Monomereinheiten. EEAMA weist einen Schmelzpunkt von etwa 102°C auf, in Abhängigkeit von der Molmasse. Bevorzugt weist es eine relative Dichte bei 20 °C (DIN 53217/ISO 2811) von 1,0 g/cm³ oder weniger und 0,85 g/cm³ oder mehr auf. Geeignete EEAMA werden beispielsweise unter dem Handelsnamen Coathylene^{®} TB3580 von der Firma Axalta Coating Systems LLC vertrieben.

Bevorzugt umfasst das Verbundmaterial im Wesentlichen das Wasserstoffspeichermaterial sowie die Matrix. Der Gewichtsanteil der Matrix bezogen auf das Gesamtgewicht des Verbundmaterials beträgt bevorzugt 10 Gew.-% oder weniger, insbesondere 8 Gew.-% oder weniger, besonders bevorzugt 5 Gew.-% oder weniger und beträgt vorzugsweise wenigstens 1 Gew.-% und insbesondere wenigstens 2 Gew.-% bis 3 Gew.-%. Es ist wünschenswert, den Gewichtsanteil an der Matrix möglichst gering zu halten. Auch wenn die Matrix in der Lage ist, Wasserstoff zu speichern, so ist die Wasserstoffspeicherfähigkeit dennoch nicht so ausgeprägt wie die des Wasserstoffspeichermaterials selbst. Die Matrix ist jedoch notwendig, um einerseits eine gegebenenfalls auftretende Oxidation des Wasserstoffspeichermaterials gering zu halten oder vollständig zu vermeiden und einen Zusammenhalt zwischen den Partikeln des Materials zu gewährleisten.

Es ist bevorzugt, dass die Matrix ein Polymer mit einer geringen Kristallinität aufweist. Durch die Kristallinität des Polymers können sich die Eigenschaften eines Materials erheblich verändern. Die Eigenschaften eines teilkristallinen Werkstoffes werden sowohl von den kristallinen als auch von den amorphen Bereichen des Polymers bestimmt. Dadurch ist ein gewisser Zusammenhang mit Kompositmaterialien zu sehen, die ebenfalls aus mehreren Substanzen aufgebaut sind. Beispielsweise nimmt bei Zunahme der Dichte die Dehnungsfähigkeit der Matrix ab.

Die Matrix kann auch in Form von Prepregs vorliegen. Prepreg ist die englische Kurzform für preimpregnated fibres (amerikanisch: preimpregnated fibers), zu Deutsch: "vorimprägnierte Fasern". Prepregs sind mit einem Polymer vorimprägnierte (englisch: preimpregnated) textile Halbzeuge, die zur Herstellung von Bauteilen unter Temperatur und Druck ausgehärtet werden. Geeignete Polymere sind solche mit einer hochviskosen, jedoch nicht polymerisierten duroplastischen Kunststoffmatrix. Die gemäß der vorliegenden Erfindung bevorzugten Polymere können auch in Form eines Prepregs vorliegen.

Die im Prepreg enthaltenen Fasern können als reine unidirektionale Schicht, als Gewebe oder Gelege vorliegen. Die Prepregs können erfindungsgemäß auch zerkleinert werden und als Flakes oder Schnipsel zusammen mit dem hydrierbaren Material zu einem Verbundwerkstoff verarbeitet werden.

Das Polymer kann erfindungsgemäß entweder in Form einer Flüssigkeit vorliegen, welche mit dem hydrierbaren Material in Kontakt gebracht wird. Flüssigkeit bedeutet dabei, dass das Polymer geschmolzen wird. Erfindungsgemäß ist jedoch auch umfasst, dass das Polymer in einem geeigneten Lösungsmittel gelöst wird, wobei das Lösungsmittel nach Herstellung des Verbundmaterials wieder entfernt wird. Es ist jedoch auch möglich, dass das Polymer in Form eines Granulats vorliegt, welches mit dem hydrierbaren Material gemischt wird. Durch das Verdichten das Verbundmaterials erweicht das Poylmer, so dass es zur Ausbildung der Matrix kommt, in welche das hydrierbare Material eingebettet ist. Wird das Polymer in Form von Teilchen, also als Granulat, eingesetzt, so weisen diese bevorzugt eine x₅₀-Teilchengröße (Volumenbasierte Teilchengröße) im Bereich von 30 µm bis 60 µm, insbesondere von 40µm bis 45 µm auf. Die x₉₀ Teilchengröße liegt insbesondere bei 90 µm oder weniger, bevorzugt bei 80 µm oder weniger.

Der erfindungsgemäße Wasserstoffspeicher weist neben dem ersten Bereich, welcher das hydrierbare Material umfasst, wenigstens einen hiervon verschiedenen zweiten Bereich auf, der eine oder mehrere Schichten hat. Eine dieser Schichten kann beispielsweise eine wärmeleitende Schicht sein. Eine wärmeleitende Schicht kann erfindungsgemäß wenigstens ein wärmeleitendes Metall und/oder Graphit umfassen. Das wärmeleitende Material soll dabei eine gute Wärmeleitfähigkeit einerseits, andererseits aber auch ein möglichst geringes Gewicht aufweisen, um das Gesamtgewicht des Wasserstoffspeichers möglichst gering zu halten. Das Metall weist bevorzugt eine Wärmeleitfähigkeit λ von 100 W/(m·K) oder mehr, insbesondere von 120 W/(m·K) oder mehr, bevorzugt von 180 W/(m·K) oder mehr, besonders von 200 oder mehr auf. Das wärmeleitende Metall kann erfindungsgemäß auch eine Metalllegierung oder eine Mischung unterschiedlicher Metalle sein. Bevorzugt ist das wärmeleitende Metall ausgewählt aus Silber, Kupfer, Gold, Aluminium sowie Mischungen aus diesen Metallen oder Legierungen, die diese Metalle umfassen. Besonders bevorzugt ist Silber, da dies eine sehr hohe Wärmeleitfähigkeit von über 400 W/(m·K) aufweist. Bevorzugt ist ebenfalls Aluminium, da dieses neben der hohen Wärmeleitfähigkeit von 236 W/(m·K) eine geringe Dichte und damit ein geringes Gewicht aufweist.

Graphit umfasst erfindungsgemäß sowohl expandierten als auch nicht-expandierten Graphit. Bevorzugt wird expandierter Graphit eingesetzt. Alternativ können auch Kohlenstoffnanoröhrchen (einwandig, doppelwandig oder mehrwandig) eingesetzt werden, da diese ebenfalls eine sehr hohe Wärmeleitfähigkeit aufweisen. Auf Grund der hohen Kosten der Nanoröhrchen ist es bevorzugt expandierten Graphit oder Mischungen aus expandiertem Graphit und nicht expandiertem Graphit einzusetzen. Liegen Mischungen vor, wird gewichtsbezogen mehr nichtexpandierter Graphit als expandierter Graphit eingesetzt.

Naturgraphit in gemahlener Form (nicht-expandierter Graphit) haftet schlecht im Verbundmaterial und lässt sich nur schwer zu einem dauerhaften, stabilen Verbund verarbeiten. Daher werden bei der Metallhydrid-basierten Wasserstoffspeicherung bevorzugt solche Graphitqualitäten genutzt, die auf expandiertem Graphit basieren. Dieser wird insbesondere aus Naturgraphit hergestellt und hat eine deutliche geringere Dichte als nicht-expandierter Graphit, haftet aber gut im Verbund, so dass ein stabiler Verbundwerkstoff erhalten werden kann. Würde man jedoch ausschließlich expandierten Graphit einsetzen, würde das Volumen des Wasserstoffspeichers zu groß, um diesen wirtschaftlich betreiben zu können. Daher werden vorzugsweise Mischungen aus expandiertem und nichtexpandiertem Graphit eingesetzt.

Wird der Wasserstoffspeicher beziehungsweise das Verbundmaterial und/oder der Verbundwerkstoff mittels Pressen kompaktiert, so entsteht durch expandierten Graphit eine orientierte Schicht, welche besonders gut Wärme leiten kann. Die Graphitschichten (hexagonale Ebenen) in expandiertem Graphit werden durch den Druck beim Verpressen gegeneinander verschoben, so dass sich Lamellen oder Schichten ausbilden. Diese hexagonalen Ebenen des Graphits liegen dann quer (annähernd senkrecht zur Druckrichtung während eines axialen Pressvorgangs), so dass der Wasserstoff anschließend leicht in das Verbundmaterial eingebracht werden kann und die Wärme gut heraus- oder hereingeleitet werden kann. Hierdurch kann nicht nur eine Wärmeleitung sondern auch eine Gasdurchführung beziehungsweise eine Fluiddurchführung ermöglicht werden.

Alternativ kann der expandierte Graphit beispielsweise mittels Kalenderwalzen zu Folien verarbeitet werden. Diese Folien werden anschließend wieder vermahlen. Die so erhaltenen Flocken oder Flakes können dann als wärmeleitendes Material eingesetzt werden. Auf Grund des Walzens ergibt sich auch hier eine Vorzugsrichtung im Kohlenstoffgitter, wodurch eine besonders gute Wärme- und Fluidweiterleitung ermöglicht wird.

Graphit und/oder das wenigstens eine wärmeleitende Metall können in einem ersten Bereich angeordnet sein, die an eine zweite Schicht unmittelbar angrenzt. Erfindungsgemäß kann der erste Bereich, der das Verbundmaterial aufweist, als Schicht vorliegen. Somit kann beispielsweise die erste Schicht unmittelbar an eine zweite Schicht, welche das Verbundmaterial aufweist, angrenzen. Insbesondere umfasst der Wasserstoffspeicher mehrere erste und mehrere zweite Schichten, welche alternierend innerhalb des Wasserstoffspeichers angeordnet sind. Dabei ist es erfindungsgemäß auch möglich, dass der Wasserstoffspeicher eine von der ersten und der zweiten Schicht verschiedene dritte Schicht aufweist, welche zwischen der ersten und der zweiten Schicht angeordnet sein kann. Es ist aber auch möglich, dass zwei erste Schichten durch eine zweite Schicht und in der Folge zwei erste Schichten durch eine dritte Schicht voneinander getrennt sind. Es ist somit möglich, dass die dritte Schicht unmittelbar an die erste und/oder die zweite Schicht angrenzt. Neben den drei Schichten können auch weitere Schichten in Wasserstoffspeicher vorhanden sein. Grundsätzlich können die Schichten in beliebiger Reihenfolge angeordnet sein, so lange deren jeweilige Funktionen an den entsprechenden Positionen sinnvoll für den Betrieb des Wasserstoffspeichers sind.

Bevorzugt wird Graphit als wärmeleitendes Material eingesetzt, wenn ein Hochtemperaturhydrid als hydrierbares Material im Werkstoffverbund enthalten ist. Bei Niedertemperaturhydriden ist ein wärmeleitendes Metall, insbesondere Aluminium, bevorzugt. Dabei ist diese Kombination insbesondere dann bevorzugt, wenn die beiden Schichten unmittelbar aneinander grenzen. Erfindungsgemäß ist es beispielsweise möglich, dass eine erste Schicht, welche den ersten Beriech darstellt, den erfindungsgemäßen Werkstoffverbund, umfassend ein Hochtemperaturhydrid, unmittelbar an eine zweite Schicht, umfassend Graphit, angrenzt. Diese zweite Schicht kann dann wiederum unmittelbar an eine dritte Schicht, umfassend ein wärmeleitendes Metall, angrenzen, welche dann wieder an eine vierte, Graphit aufweisende Schicht angrenzt. An diese vierte Schicht kann sich dann wieder unmittelbar eine erste Schicht, umfassend den Werkstoffverbund, anschließen. Beliebige Schichtfolgen sind erfindungsgemäß möglich. Dabei bedeutet umfassen im Sinne der vorliegenden Erfindung, dass nicht nur die genannten Materialien sondern auch weitere Bestandteile enthalten sein können; bevorzugt bedeutet umfassen jedoch bestehen aus.

Graphit und/oder Aluminium und/oder andere wärmeleitende Metalle können in Form von Granulaten, als Pulver oder als Platte oder Folie vorliegen. Dabei kann eine Platte oder Folie bereits eine Schicht im Sinne der vorliegenden Erfindung darstellen. Es ist jedoch auch denkbar, dass 3-dimensionale Ausgestaltungen vorliegen, welche eine Schicht bilden, die zumindest teilweise in die Schicht des Werkstoffverbundes hineinragt, wodurch eine bessere Wärmeab- und zufuhr ermöglicht werden kann. Insbesondere Graphit weist dabei neben einer Wärmeleitfähigkeit auch eine gute Gasdurchführung auf. Aluminium weist gegenüber Graphit jedoch die bessere Wärmeleitfähigkeit auf.

Zur Gasdurchführung weist der Wasserstoffspeicher bevorzugt eine poröse Schicht auf. Hierbei kann es sich beispielsweise um eine Wärmeleitschicht umfassend Graphit handeln, wie sie weiter oben beschrieben ist. Eine poröse Schicht kann erfindungsgemäß auch ein poröser Bereich sein, in dem das wärmeleitende Metall oder auch das hydrierbare Material nicht dicht verpresst sind, so dass eine Gasdurchführung (Fluiddurchführung) leicht möglich ist.

Das hydrierbare Material kann den Wasserstoff aufnehmen und bei Bedarf wieder abgeben. In einer bevorzugten Ausführungsform umfasst das Material partikuläre Materialien in einer beliebigen 3-dimensionalen Ausgestaltung, wie Partikel, Granulate, Fasern, vorzugsweise geschnittene Fasern, Flakes und/oder sonstige Geometrien. Insbesondere kann das Material auch plattenförmig oder pulverartig ausgebildet sein. Dabei ist es nicht notwendig, dass das Material eine gleichmäßige Ausgestaltung aufweist. Vielmehr kann die Ausgestaltung regelmäßig oder unregelmäßig sein. Partikel im Sinne der vorliegenden Erfindung sind beispielsweise annähernd sphärische Partikel ebenso wie Partikel mit einer unregelmäßigen und/oder eckigen äußeren Gestalt. Die Oberfläche kann glatt sein, es ist jedoch auch möglich, dass die Oberfläche des Materials rau ist und/oder Unebenheiten und/oder Vertiefungen und/oder Erhebungen aufweist. Erfindungsgemäß kann ein Wasserstoffspeicher das Material in nur einer spezifischen 3-dimensionalen Ausgestaltung aufweisen, so dass alle Partikel des Materials die gleiche räumliche Ausdehnung aufweisen. Es ist jedoch auch möglich, dass ein Wasserstoffspeicher das Material in unterschiedlichen Ausgestaltungen/Geometrien umfasst. Durch eine Vielzahl an unterschiedlichen Geometrien oder Ausgestaltungen des Materials kann das Material in einer Vielzahl an unterschiedlichen Wasserstoffspeichern verwendet werden.

Vorzugsweise weist das Material Hohlkörper auf, zum Beispiel Partikel mit ein oder mehreren Aushöhlungen und oder mit einer Hohlform, beispielsweise eine Hohlfaser oder einen Extrusionskörper mit Hohlkanal. Der Begriff Hohlfaser beschreibt eine zylinderförmige Faser, die im Querschnitt einen oder mehrere durchgängige Hohlräume aufweist. Durch die Verwendung einer Hohlfaser, können mehrere Hohlfasern zu einer Hohlfasermembran zusammengefasst werden, wodurch eine Aufnahme und/oder Abgabe des Wasserstoffs aus dem Material auf Grund der hohen Porosität erleichtert werden kann.

Bevorzugt weist das hydrierbare Material eine bimodale Größenverteilung auf. Hierdurch kann eine höhere Schüttdichte und damit eine höhere Dichte des hydrierbaren Materials im Wasserstoffspeicher ermöglicht werden, wodurch die Wasserstoffspeicherkapazität, also die Menge an Wasserstoff, die im Speicher gespeichert werden kann, erhöht wird.

Das hydrierbare Material kann erfindungsgemäß wenigstens ein hydrierbares Metall und/oder wenigstens eine hydrierbare Metalllegierung umfassen, vorzugsweise daraus bestehen.

Als hydrierbare Materialien können auch zum Einsatz kommen:
- Erdalkalimetall- und Alkalimetallalanate,
- Erdalkalimetall- und Alkalimetallborhydride,
- Metal-Organic-Frameworks (MOF's) / Metall-organische Gerüste, und/oder
- Clathrate,
sowie natürlich jeweilige Kombinationen aus den jeweiligen Materialien.

Das Material kann erfindungsgemäß auch nichthydrierbare Metalle oder Metalllegierungen umfassen.

Das hydrierbare Material kann erfindungsgemäß ein Niedertemperaturhydrid und/oder ein Hochtemperaturhydrid umfassen. Der Begriff Hydrid bezeichnet dabei das hydrierbare Material, unabhängig davon, ob es in der hydrierten Form oder der nicht-hydrierten Form vorliegt. Niedertemperaturhydride speichern Wasserstoff vorzugsweise in einem Temperaturbereich zwischen -55°C bis 180°C, insbesondere zwischen -20 °C und 150 °C, besonders zwischen 0 °C und 140 °C. Hochtemperaturhydride speichern Wasserstoff vorzugsweise in einen Temperaturbereich ab 280°C und mehr, insbesondere ab 300 °C und mehr. Bei den genannten Temperaturen können die Hydride nicht nur Wasserstoff speichern sondern auch abgegeben, sind also in diesen Temperaturbereichen funktionsfähig.

Werden in diesem Zusammenhang 'Hydride' beschrieben, so ist hierunter das hydrierbare Material in seiner hydrierten Form als auch in seiner nicht-hydrierten Form zu verstehen. Erfindungsgemäß können bei der Herstellung von Wasserstoffspeichern hydrierbare Materialien in ihrer hydrierten oder nicht-hydrierten Form eingesetzt werden.

Bezüglich Hydride und deren Eigenschaften wird auf die Tabellen 1 bis 4 in S. Sakietuna et al, International Journal of Energy, 32 (2007), S. 1121-1140 im Rahmen der Offenbarung verwiesen.

Die Wasserstoffspeicherung (Hydrierung) kann bei Raumtemperatur erfolgen. Die Hydrierung ist eine exotherme Reaktion. Die entstehende Reaktionswärme kann abgeführt werden. Im Gegensatz hierzu muss für die Dehydrierung Energie in Form von Wärme dem Hydrid zugeführt werden. Die Dehydrierung ist eine endotherme Reaktion..

Beispielsweise kann vorgesehen sein, dass ein Niedertemperaturhydrid mit einem Hochtemperaturhydrid zusammen eingesetzt wird. So kann gemäß einer Ausgestaltung vorgesehen sein, dass beispielweise das Niedertemperaturhydrid und das Hochtemperaturhydrid gemischt in einer Schicht eines zweiten Bereichs vorgesehen sind. Auch können diese jeweils getrennt voneinander in unterschiedlichen Schichten oder Bereichen, insbesondere auch in unterschiedlichen zweiten Bereichen angeordnet sein. So kann zum Beispiel vorgesehen sein, dass zwischen diesen zweiten Bereichen ein erster Bereich angeordnet ist. Eine weitere Ausgestaltung sieht vor, dass ein erster Bereich eine Mischung aus Nieder- und Hochtemperaturhydrid in der Matrix verteilt aufweist. Auch besteht die Möglichkeit, dass verschiedene erste Bereiche entweder ein Niedertemperaturhydrid oder ein Hochtemperaturhydrid aufweisen.

Bevorzugt umfasst das hydrierbare Material ein Metall, ausgewählt aus Magnesium, Titan, Eisen, Nickel, Mangan, Nickel, Lanthan, Zirkonium, Vanadium, Chrom, oder eine Mischung aus zwei oder mehreren aus diesem Metallen. Das hydrierbare Material kann auch eine Metalllegierung aufweisen, die wenigstens eines der genannten Metalle umfasst.

Besonders bevorzugt umfasst das hydrierbare Material (Wasserstoffspeichermaterial) wenigstens eine Metalllegierung, die bei einer Temperaturen von 150 °C oder weniger, insbesondere in einem Temperaturbereich von -20°C bis 140°C, insbesondere von 0°C bis 100 °C in der Lage ist, Wasserstoff zu speichern und wieder abzugeben. Die wenigstens eine Metalllegierung ist dabei vorzugsweise ausgewählt aus einer Legierung des AB₅-Typs, des AB-Typs und/oder des AB₂-Typs. Dabei bezeichnen A und B jeweils voneinander verschiedene Metalle, wobei A und/oder B insbesondere ausgewählt sind aus der Gruppe, welche Magnesium, Titan, Eisen, Nickel, Mangan, Nickel, Lanthan, Zirkonium, Vanadium und Chrom aufweist.. Die Indizes stellen das stöchiometrische Verhältnis der Metalle in der jeweiligen Legierung dar. Dabei können die Legierungen erfindungsgemäß mit Fremdatomen dotiert sein. Der Dotierungsgrad kann erfindungsgemäß bis zu 50 Atom-%, insbesondere bis zu 40 Atom-% oder bis zu 35 Atom-%, vorzugsweise bis zu 30 Atom-% oder bis zu 25 Atom-%, besonders bis zu 20 Atom-% oder bis zu 15 Atom-%, bevorzugt bis zu 10 Atom-% oder bis zu 5 Atom-% von A und/oder B betragen. Die Dotierung kann beispielsweise mit Magnesium, Titan, Eisen, Nickel, Mangan, Nickel, Lanthan oder andere Lanthanide, Zirkonium, Vanadium und/oder Chrom erfolgen. Dabei kann die Dotierung mit einem oder mehreren unterschiedlichen Fremdatome erfolgen. Legierungen des AB₅-Typs sind leicht aktivierbar, das heißt die Bedingungen, welche zur Aktivierung notwendig sind, ähneln denen im Betrieb des Wasserstoffspeichers. Sie weisen zudem eine höhere Duktilität auf als Legierungen des AB- oder AB₂-Typs. Legierungen des AB₂ beziehungsweise des AB-Typs weisen hingegen eine höhere mechanische Stabilität und Härte gegenüber Legierungen des AB₅-Typs auf. Beispielhaft können hier FeTi als Legierung des AB-Typs, TiMn₂ als Legierung des AB₂-Typs und LaNi₅ als Legierung des AB₅-Typs genannt werden.

Besonders bevorzugt umfasst das hydrierbare Material (Wasserstoffspeichermaterial) eine Mischung aus wenigstens zwei hydrierbaren Legierungen, wobei wenigstens eine Legierung des AB₅-Typs und die zweite Legierung eine Legierung des AB-Typs und/oder des AB₂-Typs ist. Der Anteil der Legierung des AB₅-Typs beträgt insbesondere 1 Gew.-% bis 50 Gew.-%, insbesondere 2 Gew.-% bis 40 Gew.-%, besonders bevorzugt 5 Gew.-% bis 30 Gew.-% und besonders 5 Gew.-% bis 20 Gew.-% bezogen auf das Gesamtgewicht des hydrierbaren Materials.

Das hydrierbare Material (Wasserstoffspeichermaterial) liegt vorzugsweise in partikulärer Form (Partikel, Teilchen) vor.

Die Teilchen weisen insbesondere eine Teilchengröße x₅₀ von 20 µm bis 700 µm, bevorzugt von 25µm bis 500 µm, besonders von 30µm bis 400 µm, insbesondere von 50 µm bis 300 µm auf. Dabei bedeutet x50, dass 50% der Teilchen eine mittlere Partikelgröße aufweisen, die gleich oder kleiner dem genannten Wert ist. Die Teilchengröße wurde mittels Laserbeugung bestimmt, kann aber beispielsweise auch durch Siebanalyse erfolgen. Die mittlere Partikelgröße ist vorliegend die Gewichtsbasierte Partikelgröße, wobei die Volumenbasierte Partikelgröße vorliegend gleich ist. Angegeben ist hier die Teilchengröße des hydrierbaren Materials bevor es zum ersten Mal einer Hydrierung unterworfen wird. Während der Wasserstoffspeicherung treten Spannungen im Material auf, was dazu führen kann, dass während mehrere Zyklen eine Verringerung der x₅₀ Teilchengröße erfolgt.

Überraschenderweise hat sich gezeigt, dass Materialien dieser Größe besonders gute Eigenschaften bei der Wasserstoffspeicherung zeigen. Bei der Speicherung und Abgabe von Wasserstoff kommt es zu einer Dehnung (bei der Hydrierung) beziehungsweise Schrumpfung (bei der Dehydrierung) des Materials. Diese Volumenänderung kann bis zu 30% betragen. Hierdurch treten mechanische Belastungen an den Teilchen des hydrierbaren Materials, also am Wasserstoffspeichermaterial, auf. Bei mehrmaligen Be- und Entladen (Hydrieren und Dehydrieren) mit Wasserstoff hat sich gezeigt, dass die Teilchen zerbrechen. Weist das hydrierbare Material nun insbesondere eine Teilchengröße von weniger als 25µm, besonders von weniger als 30 µm und insbesondere von weniger als 50 µm auf, so entsteht während der Verwendung ein feines Pulver, welches nicht mehr effektiv Wasserstoff speichern kann. Zudem kann sich die Verteilung des Materials im Wasserstoffspeicher selbst ändern. Schüttungen, welche Teilchen des Materials mit sehr kleinen Durchmessern von wenigen Nanometern aufweisen, können sich am tiefsten Punkt des Wasserstoffspeichers sammeln. Bei einer Beladung mit Wasserstoff (Hydrierung) treten an dieser Stelle auf Grund der Ausdehnung des Wasserstoffspeichermaterials hohe Mechanische Belastungen an den Wänden des Wasserstoffspeichers auf. Durch die Wahl geeigneter Teilchengrößen für das Material kann dies wenigstens teilweise vermieden werden. Auf der anderen Seite ergeben sich durch eine kleinere Partikelgröße eine größere Anzahl an Berührungspunkten, an denen die Partikel mit der Matrix wechselwirken und in ihr haften, so dass sich hieraus eine verbesserte Stabilität ergibt, welche bei Partikeln mit einer Größe von mehr als 700 µm, insbesondere von mehr als 500 µm nicht erreicht werden kann.

Die Begriffe "Material", "hydrierbares Material" und "Wasserstoffspeichermaterial" werden in der vorliegenden Anmeldung synonym verwendet.

Eine weitere Ausgestaltung sieht vor, dass der Wasserstoffspeicher einen Hochtemperaturhydridbehälter umfassend Hochtemperaturhydride und einen Niedertemperaturbehälter umfassend Niedertemperaturhydride aufweist. Die Hochtemperaturhydride können Temperaturen von über 350 °C erzeugen, welche abgeführt werden müssen. Diese Wärme wird innerhalb kurzer Zeit freigesetzt und kann zum Beispiel zu einer Aufheizung von einer Komponente genutzt werden, die in Verbindung mit dem Wasserstoffspeicher steht. Als Hochtemperaturhydrid kann beispielweise Metallpulver auf der Basis von Magnesium genutzt werden. Das Niedertemperaturhydrid hingegen weist bevorzugt eine Temperatur in einem Bereich vorzugsweise zwischen -55°C und 155°C auf, insbesondere bevorzugt in einem Temperaturbereich zwischen 0°C Und 140°C auf, in welchem es Wasserstoff speichern und wieder abgeben kann. Ein Niedertemperaturhydrid ist beispielsweise Ti_{0,8}Zr_{0,2}CrMn oder Ti_{0,98}Zr_{0,02}V_{0,43}Cr_{0,05}Mn_{1,2}. Eine Ausgestaltung sieht vor, dass Wasserstoff vom Hochtemperaturhydridbehälter in den Niedertemperaturhydridbehälter übergeht oder umgekehrt, und jeweils dort gespeichert wird, wo die Temperatur in dem Bereich ist, in dem eine Speicherung stattfinden kann. Beispielhaft und im Rahmen der Offenbarung wird hierfür hiermit auf die DE 36 39 545 C1 verwiesen.

Eine weitere Ausgestaltung sieht wiederum vor, dass beispielsweise eine Mischung aus FeTi und MgLn zum Beispiel in einer hergestellten Ronde genutzt wird, um unterschiedliche Temperaturbereiche und auch Druckbereiche bei einem Wasserstoffspeicher und dessen Betrieb nutzen zu können. So können Nieder- und Mitteltemperaturwasserstoffspeicher gemeinsam in einem Druckbehälter genutzt werden, das bedeutet, zwei Wasserstoffspeicher, die in unterschiedlichen Temperaturbereichen genutzt werden können. Vorzugsweise haben diese beiden Temperaturbereiche nur eine Überschneidung von maximal 20°C. Sie können aber auch einen Abstand zueinander aufweisen, vorzugsweise von weniger als 50°C. Zur Temperierung hier wie auch bei anderen Ausgestaltungen wird vorzugsweise ein Wassermantel genutzt, der durch den Druckbehälter fließt und Ronden umgibt, zu denen das Verbundmaterial vorzugsweise geformt ist.

Weiterhin kann zumindest eine Komponente des Verbundmaterials, beispielsweise ein oder mehrere Zwischenschichten aus Aluminium, in einem Sinterprozess hergestellt worden sein. Bei einem Sinterprozess werden feinkörnige, keramische oder metallische Stoffe erhitzt, wobei die Temperaturen jedoch unterhalb der Schmelztemperatur der Hauptkomponenten bleiben, so dass die Gestalt des Werkstückes erhalten bleibt. Dabei kommt es in der Regel zu einer Schwindung, weil sich die Partikel des Ausgangsmaterials verdichten und Porenräume aufgefüllt werden. Man unterscheidet grundsätzlich das Festphasensintern und das Flüssigphasensintern, bei dem es auch zu einer Schmelze kommt. Durch die Temperaturbehandlung des Sinterns wird aus einem fein- oder grobkörnigen Grünkörper, der in einem vorangegangenen Prozessschritt, beispielsweise mittels Extrusion geformt wurde, ein festes Werkstück. Das Sintererzeugnis erhält erst durch die Temperaturbehandlung seine endgültigen Eigenschaften, wie Härte, Festigkeit oder Temperaturleitfähigkeit, die im jeweiligen Einsatz erforderlich sind. So kann auf diese Weise beispielweise eine offenporige Matrix geschaffen werden, in die das hydrierbare Material eingelassen wird. Auch besteht die Möglichkeit, auf diese Weise Kanalstrukturen zu schaffen, die beispielsweise gasführend sind und in den Wasserstoffspeicher eingesetzt werden.

Es ist bevorzugt, dass das hydrierbare Material vorzugsweise einen Anteil von größer 50 bis 98 Vol.-% und die Matrix vorzugsweise einen Anteil von mindestens 2% bis 50 Vol.-% am Verbundstoff besitzt. Der Anteil von Vol.-% des hydrierbaren Materials und der Matrix kann durch bekannte Testmethoden und Erfassungsmethoden, beispielsweise mit Hilfe eines Elektronenrastermikroskops, ermittelt werden. Ebenfalls ist die Nutzung eines Lichtmikroskops möglich. Vorzugsweise wird ein Bildprogramm genutzt, wobei eine Auswertung mittels Computerprogramm automatisch erfolgt

In einer bevorzugten Ausführungsform weist die Matrix neben dem einen Polymer weiterhin Kohlenstoff in einer beliebigen Modifikation auf. Bevorzugt liegt der Kohlenstoff in Form von Graphit, insbesondere natürlichem expandiertem Graphit vor. Es kann dadurch die entstehende Wärme bei der Aufnahme und/oder Abgabe des Wasserstoffs besser abgeleitet werden.

Eine Komponente, zum Beispiel der Kohlenstoff, kann auch als Trennung zwischen Materialien eingesetzt werden, die ansonsten miteinander nicht gemeinsam in einem Wasserstoffspeicher eingesetzt werden könnten. So kann mittels einer Barriere durch die Matrix Aluminium wie auch Magnesium gemeinsam zum Einsatz kommen.

Es ist bevorzugt, dass die Matrix und/oder eine Schicht eine Mischung aus verschiedenen Kohlenstoffmodifikationen aufweist, umfassend beispielweise expandierten natürlichen Graphit als eine der Kohlenstoffmodifikationen. Bevorzugt wird nichtexpandierter Graphit zusammen mit expandiertem natürlichen Graphit verwendet, wobei gewichtsbezogen mehr nichtexpandierter Graphit als expandierter Graphit eingesetzt wird. Insbesondere kann die Matrix expandierten natürlichen Graphit aufweisen, in dem zum Beispiel ein hydrierbares Material angeordnet wird. Weitere Kohlenstoffmodifikationen umfassen zum Beispiel einwandige, doppelwandige oder mehrwandige Nanoröhrchen (single walled, double walled, multi walled nanotubes), Graphene wie auch Fullerene.

Vorzugsweise weist das Verbundmaterial eine elastische Eigenschaft in zumindest einem Bereich aufweist. Auf diese Weise kann sichergestellt werden, dass sich beispielsweise bei der Aufnahme von Wasserstoff das hydrierbare Material ausdehnen kann, ohne dabei das Verbundmaterial zu beschädigen oder überzustrapazieren.

In einer bevorzugten Ausführungsform hat der Wasserstoffspeicher sich abwechselnde erste und zweite Bereiche mit einer Matrix einerseits und mit einer oder mehreren Schichten andererseits. Durch die abwechselnde Anordnung der ersten und zweiten Bereiche kann zum Beispiel einer Entmischung der Schichten der zweiten Bereiche durch die ersten Bereiche entgegengewirkt werden. Durch die Matrix der ersten Bereiche kann beispielweise die Anordnung der ersten und zweiten Bereiche fest positioniert werden. Dadurch können beim Durchströmen des Wasserstoffspeichers mit einem Fluid beispielsweise die leichten Bestandteile der Schichten der zweiten Bereicht beispielsweise nach unten gespült werden, da diese durch die Matrix der angrenzenden ersten Schichten aufgehalten werden würden.

Es ist bevorzugt, dass der erste Bereich in einem inneren Bereich des Wasserstoffspeichers angeordnet ist und der zweite Bereich in einem äußeren Bereich des Wasserstoffspeichers. Der innere Bereich kann in einer Ausgestaltung in axialer Richtung des Wasserstoffspeichers beispielsweise die Mitte des Wasserstoffspeichers sein. Weiterhin kann der innere Bereich auch in radialer Richtung des Wasserstoffspeichers gesehen nur ein Bereich entlang der Längsachse des Wasserstoffspeichers sein, so dass die Matrix durch die Schichten vollständig umschlossen ist. Des Weiteren besteht die Möglichkeit, dass erste Bereiche in einem äußeren Bereich des Wasserstoffspeichers angeordnet sind und zweite Bereiche in einem Inneren des Wasserstoffspeichers. Auch besteht die Möglichkeit, dass erste und zweite Bereich an unterschiedlichen Orten im Wasserstoffspeicher angeordnet sind. Bevorzugt können erste und zweite Bereiche auch unter Nutzung von Optimierungsberechnungen angeordnet sein. Hierbei kann ein Kriterium die Wärmeleitfähigkeit, ein anderes Kriterium die Gasdurchlässigkeit, wiederum ein anderes Kriterium die Wasserstoffspeicherfähigkeit sein. So kann es zum Beispiel je nach Größendimensionierung vorteilhaft sein, erste und zweite Bereiche von Innen nach Außen mit unterschiedlicher jeweiliger Dichte vorzusehen. Auch können erste und zweite Bereiche jeweils eine verschiedene Gasdurchlässigkeit besitzen. Daher kann es zum Beispiel sinnvoll sein, dass ein Bereich mit größere Gasdurchlässigkeit in einem Außenbereich des Wasserstoffspeichers angeordnet ist als ein weniger gasdurchlässiger Bereich in einem Innenbereich angeordnet ist.

Des Weiteren kann vorgesehen sein, dass verschiedene Verbundmaterialien zusammen in einem Wasserstoffspeicher eingesetzt werden. So können zum Beispiel Verbundmaterialien mit Unterschieden hinsichtlich der ersten und zweiten Bereiche zusammengesetzt im Wasserstoffspeicher genutzt werden. Auch können hier vorgeschlagene Verbundmaterialien mit anderen hydrierbaren Lagen und/oder Matrices eingesetzt werden, die zum Beispiel jeweils für sich einen kompaktierten Materialverbund bilden. Dieses kann zum Beispiel mittels kompaktierter Scheiben erfolgen, die übereinander stapelbar sind. Es besteht aber auch die Möglichkeit, dass eine gemeinsame Kompaktierung erfolgt. Zum Beispiel können erste und zweite Bereiche so wie vorgeschlagen angeordnet werden, wobei sich an diese nur Lagen oder nur Matrices anschließen. Dann kann derartiges miteinander kompaktiert werden, um ein Verbundmaterial zu bilden.

Gemäß einer Ausgestaltung sind der erste und der zweite Bereich im Verbundmaterial nebeneinander entlang einer Ebene angeordnet. Hierbei können auch geometrische Formen wie Kern-Mantel-Strukturen mit dem ersten oder dem zweiten Bereich als Mantel beziehungsweise als Kern gebildet werden. Auch andere geometrische Strukturen können durch die Anordnung von ersten und zweiten Bereichen im Verbundmaterial geschaffen werden. Erste und zweite Bereiche können dabei horizontal oder auch vertikal angeordnet sein. Auch können auf diesen Weise unterschiedliche Dehnungseigenschaften von ersten und zweiten Bereichen miteinander kombiniert werden, beispielweise damit das gesamte Verbundmaterial stabilisieren. Gemäß einer Ausgestaltung kann vorgesehen werden, dass beispielsweise die Dehnungseigenschaften der ersten und der zweiten Bereiche sich derart ergänzen, dass das gesamte Verbundmaterial eine annähernd gleiche Dimensionierung behält, vorzugsweise unabhängig davon, ob Wasserstoff aufgenommen wird oder wieder abgegeben wird.

Die Kompaktierung kann im Übrigen unter gleichzeitigem Einfluss von Wärme und/oder von zum Beispiel einem Gas erfolgen. Auch kann zum Beispiel eine Absaugung vorgesehen sein, beispielweise zum Absaugen von einem Binder, der eventuell in einem ersten und/oder in einem zweiten Bereich angeordnet ist. Der Binder kann beispielweise vollständig wie auch nur teilweise aus dem Verbundmaterial entfernt werden, beispielweise zur Schaffung einer porösen Struktur. So kann beispielsweise in einem der beiden Bereiche ein Binder angeordnet sein und in dem anderen der beiden Bereich kein Binder. Auch können unterschiedliche Binder Verwendung finden, zum Beispiel ist in dem ersten Bereich ein anderer Binder als in dem zweiten Bereich vorgesehen.

Die Erfindung betrifft weiterhin ein Verfahren zur Herstellung eines Wasserstoffspeichers, vorzugsweise eines oben wie auch noch nachfolgend beschriebenen Wasserstoffspeichers, wobei ein erster Bereich des Wasserstoffspeichers mittels einer Matrix gebildet wird, in die ein hydrierbares Material eingebettet wird, und ein zweiter Bereich des Wasserstoffspeichers mittels einer oder mehrerer Schichten gebildet wird, wobei zur Herstellung einer Schicht vorzugsweise im Wesentlichen ein einzelnes Material oder eine homogenisierte Materialmischung verwendet wird.

In einer bevorzugten Ausgestaltung werden der erste und der zweite Bereich jeweils unabhängig voneinander gefertigt werden und anschließend beide Bereiche zusammengesetzt.

Es ist bevorzugt, dass zuerst einer der beiden ersten und zweiten Bereiche hergestellt wird und anschließend der andere Bereich hergestellt wird. Beispielsweise kann der eine Bereich den anderen Bereich zumindest teilweise umgeben, beispielsweise auch umschließen.

Eine weitere Ausgestaltung wiederum sieht vor, dass beide Bereiche gleichzeitig hergestellt werden.

Der erste und der zweite Bereich werden miteinander verpresst und bilden einen Verbundbereich. Das Verpressen kann zum Beispiel mit Hilfe eines Ober- und eines Unterstempels durch Druck axial erfolgen. Weiterhin kann das Verpressen über ein isostatisches Pressen erfolgen. Die isostatische Pressmethode beruht auf dem physikalischen Gesetz, dass sich der Druck in Flüssigkeiten und Gasen allseitig gleichmäßig fortpflanzt und auf den beaufschlagten Flächen Kräfte erzeugt, die zu diesen Flächen direkt proportional sind. Die ersten und zweiten Bereiche können beispielsweise in einer Gummiform in den Druckbehälter einer Pressanlage gebracht werden. Der Druck, der über die Flüssigkeit im Druckbehälter allseitig auf die Gummiform wirkt, komprimiert die eingeschlossenen ersten Bereiche und zweiten Bereiche gleichmäßig. Auch kann eine Vorform enthaltend die ersten und die zweiten Bereiche in die isostatische Presse eingelegt werden, zum Beispiel in eine Flüssigkeit. Durch Aufprägung von hohen Drücken in einem Bereich von 500 bis zu 6000 bar wird das Verbundmaterial hergestellt. Die hohen Drücke beim isostatischen Pressen erlauben zum Beispiel, dass neue Werkstoffeigenschaften im Verbundmaterial entstehen können.

Beschrieben wird weiter, nicht gemäß der vorliegenden Erfindung, eine Vorrichtung zur Herstellung eines Wasserstoffspeichers, vorzugsweise eines oben beschriebenen Wasserstoffspeichers, insbesondere bevorzugt mit einem oben beschriebenen Verfahren, wobei die Vorrichtung eine Station zum Zusammenfügen von ersten und zweiten Bereichen des Wasserstoffspeichers aufweist, wobei der erste Bereich eine Matrix mit in der Matrix angeordneten hydrierbaren Material und der zweite Bereich Schichten aufweist, die schwerpunktmäßig jeweils eine der folgenden Funktionen besitzen: Wasserstoffspeicherung, Wärmeleitung oder Gasdurchführung.

Das hydrierbare Material kann derart in den Wasserstoffspeicher eingefüllt, dass sich eine Helixstruktur der Matrix und/oder der Schicht ergibt.

Der Begriff Helixfüllung beziehungsweise Helixstruktur beschreibt hierbei eine Anordnung des Materials durch eine Füllvorrichtung, die ihre Auslassöffnung zum Auslassen des hydrierbaren Materials im Kreis schwenkt, so dass eine Helixstruktur entsteht. Weiterhin kann die Füllvorrichtung die Auslassöffnung nur hin und her schwenken, so dass das ausgetragene Material eine Wellenform aufweist. Das hydrierbare Material kann beispielweise auch mittels Schlickerguss oder Extrusion in die Matrix eingebracht werden. Im Umfang der Offenbarung der Erfindung wird hierfür Bezug genommen auf den diesbezüglichen Inhalt der DE 10 2014 006 379 und der DE 10 2014 006 367.

Das hydrierbare Material in die Matrix und die Schichten können graduell im Wasserstoffspeicher angeordnet sein.

Der Begriff graduell beschreibt, dass das hydrierbare Material in der Matrix und in den Schichten einen Gradienten aufweist, zum Beispiel so, dass ein Gefälle oder ein Anstieg der Konzentration/des Anteils des hydrierbaren Materials vorhanden ist, beispielsweise in Abhängigkeit des Fluids, welches durch den Wasserstoffspeicher strömt.

Für die Lagen, die die Schichten im Verbundmaterial bilden, ist bevorzugt vorgesehen, dass diese ein erstes Material und ein zweites Material örtlich getrennt voneinander aufweisen, die jeweils separate Lagen bilden, die benachbart zueinander sind, vorzugsweise aneinander stoßen, wobei das erste Material ein primär wasserstoffspeicherndes Material umfasst, und das zweite Material ein primär wärmeleitendes Material aufweist, wobei das primär wärmeleitende Material sich von einem Inneren des Wasserstoffspeichers zu einem Äußeren des Wasserstoffspeichers erstreckt. Bevorzugt ist vorgesehen, dass zwischen der ersten und der zweiten Lage ein Gradient ausgebildet ist, entlang dem sich ein Übergang von der ersten zu der zweiten Lage sich vollzieht.

Zum Beispiel wird eine zylinderförmige Gesamtgeometrie des Verbundmaterials angestrebt, wobei eine Zu- wie auch eine Abführung von Gas vorgesehen ist. Durch eine Gasführung in die Schichten kann der Wasserstoff aufgenommen wie auch abgegeben werden. Vorzugsweise erstreckt sich daher eine wärmeleitende Schicht nicht nur senkrecht zu einer Zylinderachse von Innen nach Außen. Vielmehr können wärmeleitende Schichten auch in einem außersenkrechten Winkel zu einer Zylinderachse sich durch das Verbundmaterial erstrecken. Die wärmeleitende Schicht und deren Ausrichtung kann zum Beispiel durch eine entsprechende Anordnung von Aluminiumpartikel erfolgen.

Auch kann vorgesehen sein, dass der Wasserstoffspeicher Komponenten in Form einer Kern-Mantel-Struktur aufweist, bei der der Kern ein erstes Material umfasst und der Mantel ein davon verschiedenes zweites Material umfasst, wobei das erste Material und/oder das zweite Material ein wasserstoffspeicherndes Material aufweisen. Dieses wird zum Beispiel bevorzugt in den Schichten des Verbundmaterials vorgesehen. Eine Ausgestaltung sieht vor, dass das zweite Material des Mantels ein Polymer aufweist, was zumindest wasserstoffdurchlässig gestaltet ist. Eine weitere Ausgestaltung sieht vor, dass der Kern ein wärmeleitendes Material aufweist und der Mantel ein wasserstoffspeicherndes Material. Wiederum kann vorgesehen sein, dass der Kern ein primär wasserstoffspeicherndes Material aufweist und der Mantel ein primär wärmeleitendes Material, wobei das wärmeleitende Material wasserstoffdurchlässig ist.

Des Weiteren kann das Verfahren zur Herstellung des Wasserstoffspeichers vorsehen, dass getrennte Lagen von einem wasserstoffspeicherndem Material und einem wärmeleitenden Material in ein Presswerkzeug gefüllt werden, diese miteinander verpresst werden zur Erzeugung einer Sandwichstruktur, wobei das wärmeleitende Material bei Einsatz der Sandwichstruktur als Wasserstoffspeicher eine Wärmeleitung bevorzugt in einer radialen Richtung des Wasserstoffspeichers übernimmt. Zwischen die getrennten Lagen und/oder benachbart dazu können beispielsweise ein oder mehrere Matrices angeordnet werden, so dass das Verbundmaterial dadurch erste und zweite Bereiche erhält.

Beispielwiese kann vorgesehen sein, dass ein Metallpulver und/oder normaler natürlicher Graphit als wärmeleitendes Material genutzt werden, wobei bei einer Nutzung des normalen natürlichen Graphits bevorzugt dessen linsenförmige Partikel beim Füllen vorzugsweise horizontal ausgerichtet werden, so dass eine Wärmeleitung in Richtung einer ausgerichteten hexagonalen Gitterstruktur in der Sandwichstruktur genutzt werden kann.

Weiterhin kann vorgesehen sein, dass alternativ oder zusätzlich ein oder mehrere Folien aus einem gewalzten expandierten Graphit, Flocken aus einem gewalzten expandierten Graphit und/oder ein Graphitgewebe als wärmeleitendes Material in die Sandwichstruktur eingebracht werden.

Eine weitere Ausgestaltung sieht vor, dass eine oder mehrere Lagen eines porös bleibenden Materials als Gasleitschichten in die Sandwichstruktur eingebracht und mit gepresst werden. Bevorzugt werden mehrere Sandwichstrukturen getrennt voneinander gepresst und anschließend in einem gemeinsamen Behälter angeordnet.

Weitere vorteilhafte Ausgestaltungen wie auch Merkmale gehen aus den nachfolgenden Figuren und der dazugehörigen Beschreibung hervor. Die aus den Figuren und der Beschreibung hervorgehenden einzelnen Merkmale sind nur beispielhaft und nicht auf die jeweilige Ausgestaltung beschränkt. Vielmehr können aus ein oder mehrere Figuren ein oder mehrere Merkmale mit anderen Merkmalen aus anderen Figuren wie auch aus der obigen Beschreibung zu weiteren Ausgestaltungen verbunden werden. Daher sind die Merkmale nicht beschränkend sondern beispielhaft angegeben. Es zeigen:
- Fig. 1: einen ersten Ausschnitt aus einem ersten Wasserstoffspeicher mit einem ersten mittig angeordneten Bereich und einem zweiten, um den ersten Bereich angeordneten zweiten Bereich,
- Fig. 2: einen Ausschnitt aus einer Matrix des ersten Bereichs des ersten Wasserstoffspeichers,
- Fig. 3: ein Verbundmaterial mit ersten Bereichen innerhalb der zweiten Bereiche,
- Fig. 4: einen Wasserstoffspeicher mit einem Niedrigtemperatur- und einem Hochtemperaturbereich, und
- Fig.5: eine beispielhafte Fertigung eines Wasserstoffspeichers mit ersten und zweiten Bereichen.

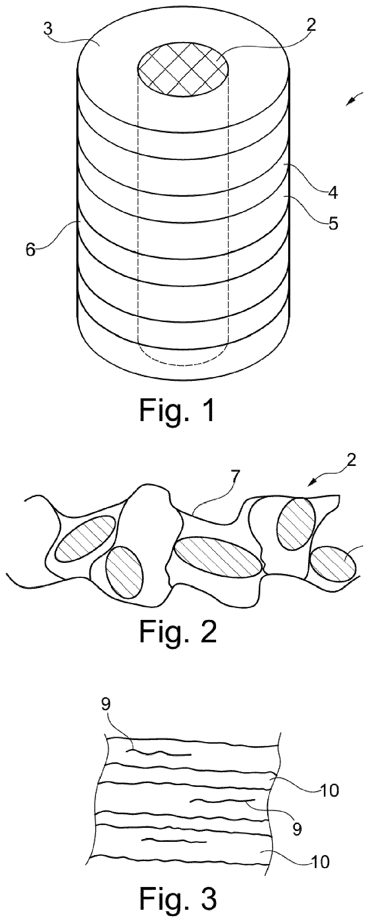

Fig. 1 zeigt in schematischer Ansicht einen ersten Wasserstoffspeicher 1 mit einem ersten mittig angeordneten Bereich 2. Der erste Bereich 2 weist eine Matrix auf, in die ein hydrierbares Material eingebettet ist. Die Matrix ist vorzugsweise nicht nur in der Lage, das hydrierbare Material lokal zu positionieren und zumindest weitestgehend zu fixieren. Darüber hinaus weist die Matrix die Möglichkeit auf, dass zum Beispiel eine gewisse Wärmeleitfähigkeit aber gegebenenfalls auch Porosität zur Verfügung gestellt wird. So kann zum Beispiel ein expandierter natürlicher Graphit als Matrix genutzt werden, in den Partikel o.ä. eingebettet sind. Neben der Wasserstoffspeicherung ist so auch eine Wärmeleitfähigkeit der Matrix gegeben. Die Fixierung der Partikel kann über die Matrix erfolgen. Auch können diese dort ein gewisses Spiel aufweisen, was sich zum Beispiel auf eine Pore beschränkt. Es besteht aber auch die Möglichkeit, zum Beispiel eine geschlossene Porosität vorzusehen und in den geschlossenen Poren zum Beispiel Partikel einzuschließen, die beispielweise eine Wasserstoffspeicherfähigkeit besitzen. Um den ersten Bereich 1 ist ein zweiter Bereich 3 vorzugsweise als vollständig umschließender Ring aufgebaut. Es besteht aber auch die Möglichkeit, Durchlässe, Spalten, Ausbrüche wie auch Öffnungen vorzusehen. Der zweite Bereich 3 weist zum Beispiel einen Wechsel von verschiedenen Schichten auf, die jeweils unterschiedliche Primäraufgaben aufweisen, nämlich Wasserstoffspeicherung, Wärmeleitung und Gasdurchführung. So kann zum Beispiel eine erste Schicht 4 die Gasdurchlässigkeit für den Wasserstoff sicherstellen, so dass dieser zum Beispiel entweder bis zum ersten Bereich 1 ohne hohe Druckverluste durchströmen oder von dem ersten Bereich 2 abströmen kann. Eine zweite Schicht 5 wiederum ist in der Lage, die entstehende Wärme zu verteilen, insbesondere abzuleiten, vorzugsweise von einem Inneren des Wasserstoffspeichers 1 zu einem Äußeren desselben. Die Wärmeleitung erfolgt vorzugsweise über Konduktion, wobei eine Wärmeübertragung darüber hinaus auch durch Strahlungseffekte etc. beeinflusst sein kann. Auch wenn die Schichten in etwa parallel verlaufend scheibenförmig dargestellt sind, handelt es sich dabei nur um eine mögliche Ausgestaltung. Ebenso kann die wärmeleitende Schicht sich auch zum Beispiel in die gasführende Schicht erstrecken, ebenso in die wasserstoffspeichernde Schicht 6. Neben der horizontalen Erstreckung kann die Schicht auch vertikal sich erstrecken. Auch kann eine Schicht eine Vertikal- wie auch Horizontalkomponente aufweisen. Das so gebildete Verbundmaterial kann insgesamt wie auch sukzessive gepresst werden.

Fig. 2 zeigt einen Ausschnitt aus einer Matrix 7 des ersten Bereichs 2 des Wasserstoffspeichers aus der Fig. 1 in schematischer Ansicht. Die Matrix 7 weist schematisch angedeutet zum Beispiel eingebettete Partikel 8 auf. Diese können zum Beispiel auch Granulen sein. Die Matrix weist vorzugsweise eine gewisse Dehnungseigenschaft, vorzugsweise elastische Eigenschaft auf. Diese kann dazu dienen, die Partikel 8 in ihrer Position zu belassen, wenn diese ihr Volumen aufgrund der Wasserstoffspeicherung beziehungsweise Wasserstoffabgabe verändern.

Fig. 3 zeigt ein weiteres Ausführungsbeispiel eines Verbundmaterials, bei dem erste Bereiche 9 und zweite Bereiche 10 gemischt vorliegen. Insbesondere sind die ersten Bereiche in die zweiten Bereiche 10 eingelassen, vorzugsweise in eine der verschiedenen Schichten des zweiten Bereichs. Dieses kann zum Beispiel durch ein sukzessives Befüllen mit unterschiedlichen Materialien in eine Kavität erzielt werden, wobei sodann die Füllung verpresst und das Verbundmaterial gebildet wird.

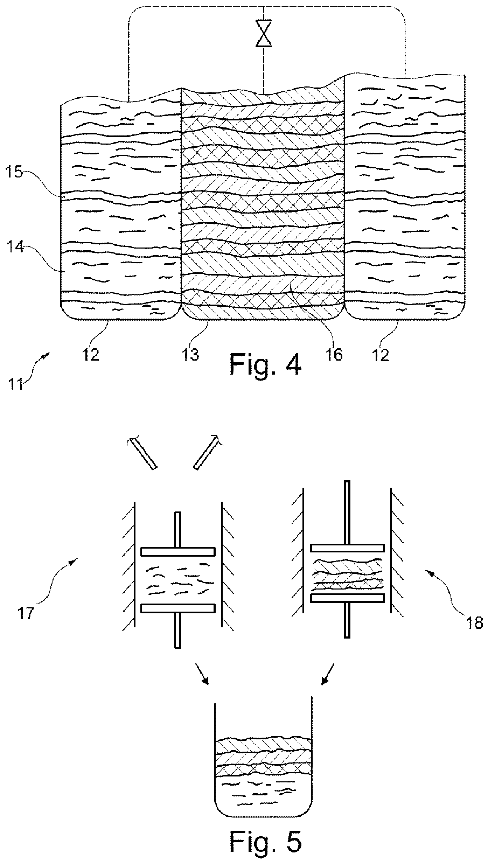

Fig. 4 zeigt beispielhaft einen Wasserstoffspeicher 11 mit einem Niedertemperaturhydridbereich 12 und einem Hochtemperaturhydridbereich 13. Letzterer ist mittig angeordnet und wird vorzugsweise im Wasserstoffspeicher 11 vom Niedertemperaturhydridbereich 12 umgeben. Während zum Beispiel der Niedertemperaturhydridbereich 12 zum Beispiel jeweils erste 14 und zweite Bereiche 15 aufweist, ist beispielsweise der Hochtemperaturbereich nur mit Schichten 16 versehen, die aufeinander lagern. Auch umgekehrte Anordnungen von beiden Bereichen sind möglich.

Fig. 5 zeigt beispielhaft eine schematische Herstellung eines ersten 17 und eines zweiten Bereichs 18 jeweils getrennt voneinander. Diese werden auch getrennt voneinander kompaktiert und anschließend zusammengeführt, um ein Verbundmaterial in einem Behälter zu bilden.

Die vorliegende Anmeldung umfasst daher einen Wasserstoffspeicher aufweisend ein Verbundmaterial mit einem hydrierbaren Material, wobei das Verbundmaterial in einem ersten Bereich zumindest eine Matrix aufweist, in die das hydrierbare Material eingebettet ist, und in einem anderen, zweiten Bereich ein oder mehrere Schichten aufweist, wobei eine der Schichten schwerpunktmäßig eine der folgenden Funktionen aufweist: Wasserstoffspeicherung, Wärmeleitung oder Gasdurchführung. Bevorzugt weisen die Matrix und zumindest eine Schicht jeweils Kohlenstoff auf. Insbesondere weisen die Matrix und/oder eine Schicht eine Mischung aus verschiedenen Kohlenstoffmodifikationen auf, umfassend expandierten natürlichen Graphit als eine der Kohlenstoffmodifikationen.

Bevorzugt weist das Verbundmaterial eine elastische Eigenschaft in zumindest einem Bereich aufweist. Insbesondere hat der Wasserstoffspeicher sich abwechselnde erste und zweite Bereiche mit einerseits einer Matrix und andererseits mit ein oder mehreren Schichten.

Dabei kann der erste Bereich in einem inneren Bereich des Wasserstoffspeichers und der zweite Bereich in einem äußeren Bereich des Wasserstoffspeichers angeordnet sein.

Der erfindungsgemäße Wasserstoffspeicher kann ein Niedertemperaturhydrid und ein Hochtemperaturhydrid aufweist.

In einer weiteren Ausführungsform wird die der vorliegenden Erfindung zu Grunde liegende Aufgabe gelöst durch ein Verfahren zur Herstellung eines Wasserstoffspeichers, wobei ein erster Bereich des Wasserstoffspeichers mittels einer Matrix gebildet wird, in die ein hydrierbares Material eingebettet wird, und ein zweiter Bereich des Wasserstoffspeichers mittels ein oder mehrerer Schichten gebildet wird, wobei zur Herstellung einer Schicht, vorzugsweise im Wesentlichen ein einzelnes Material oder eine homogenisierte Materialmischung verwendet wird. Bevorzugt werden der erste und der zweite Bereich jeweils unabhängig voneinander gefertigt und anschließend werden beide Bereiche zusammengesetzt. Es ist auch möglich, dass zuerst einer der beiden ersten und zweiten Bereiche hergestellt und anschließend der andere Bereich unter Einbeziehung des schon hergestellten Bereichs hergestellt wird.

Der erste und der zweite Bereich werden miteinander verpresst und bilden einen Verbundbereich.

Beschrieben wird weiter, nicht gemäß der vorliegenden Erfindung, eine Vorrichtung zur Herstellung eines Wasserstoffspeichers, vorzugsweise eines Wasserstoffspeichers und insbesondere bevorzugt mit einem Verfahren wie zuvor beschrieben, wobei die Vorrichtung eine Station zum Zusammenfügen von ersten und zweiten Bereichen des Wasserstoffspeichers aufweist, wobei der erste Bereich eine Matrix mit in der Matrix angeordneten hydrierbaren Material und der zweite Bereich Schichten aufweist, die schwerpunktmäßig jeweils eine der folgenden Funktionen besitzen: Wasserstoffspeicherung, Wärmeleitung oder Gasdurchführung.

Dabei kann die Vorrichtung derart ausgestaltet sein, dass das hydrierbare Material in einer Helixfüllung in die Matrix und/oder Schicht eingefüllt werden kann und das hydrierbare Material insbesondere in der Matrix und den Schichten innerhalb des Wasserstoffspeichers graduell angeordnet sind.

## Patentansprüche

1. Wasserstoffspeicher aufweisend ein Verbundmaterial mit einem hydrierbaren Material, wobei das Verbundmaterial in einem ersten Bereich zumindest eine Matrix, umfassend wenigstens ein Polymer, aufweist, in die das hydrierbare Material eingebettet ist, und in einem anderen, zweiten Bereich eine oder mehrere Schichten aufweist, wobei wenigstens eine der Schichten eine der folgenden Funktionen als eine Hauptaufgabe in dem zweiten Bereich des Verbundmaterials aufweist: Wasserstoffspeicherung, Wärmeleitung oder Gasdurchführung; wobei der erste und der zweite Bereich bei Drücken von 500 bis 6000 bar miteinander verpresst sind und einen Verbundbereich bilden.

2. Wasserstoffspeicher nach Anspruch 1, **dadurch gekennzeichnet, dass** die Matrix weiterhin Kohlenstoff aufweist, bevorzugt die Matrix und/oder eine Schicht eine Mischung aus verschiedenen Kohlenstoffmodifikationen aufweist, umfassend expandierten natürlichen Graphit als eine der Kohlenstoffmodifikationen.

3. Wasserstoffspeicher nach Anspruch 1 oder 2, **dadurch gekennzeichnet, dass** der zweite Bereich wenigstens eine Schicht umfasst, die ein wärmeleitendes Material, insbesondere Kohlenstoff und/oder ein wärmeleitendes Metall, insbesondere Aluminium, aufweist.

4. Wasserstoffspeicher nach einem der Ansprüche 1 bis 3, **dadurch gekennzeichnet, dass** das wärmeleitende Material ein Metall oder eine Metalllegierung aufweist, vorzugsweise Aluminium und/oder Kupfer und/oder Legierungen aus diesem aufweist.

5. Wasserstoffspeicher nach einem der Ansprüche 2 bis 4, **dadurch gekennzeichnet, dass** der Kohlenstoff in Form von natürlichem expandiertem Graphit vorliegt.

6. Wasserstoffspeicher nach einem der Ansprüche 1 bis 5, **dadurch gekennzeichnet, dass** das Polymer eine Dichte im Bereich von 0,7 g/cm³ bis 1,3 g/cm³, insbesondere von 0,8 g/cm³ bis 1,25 g/cm³ aufweist.

7. Wasserstoffspeicher nach einem der Ansprüche 1 bis 6, **dadurch gekennzeichnet, dass** das Polymer eine Zugfestigkeit im Bereich von 10 MPa bis 100 MPa, insbesondere von 15 MPa bis 90 MPa aufweist.

8. Wasserstoffspeicher nach einem der Ansprüche 1 bis 7, **dadurch gekennzeichnet, dass** das Polymer ausgewählt ist aus der Gruppe umfassend EVA, PMMA und EEAMA sowie Mischungen dieser Polymere.

9. Wasserstoffspeicher nach einem der Ansprüche 1 bis 8, **dadurch gekennzeichnet, dass** er sich abwechselnde erste und zweite Bereich mit einer Matrix einerseits und mit ein oder mehreren Schichten andererseits hat und/oder der erste Bereich in einem inneren Bereich des Wasserstoffspeichers angeordnet ist und der zweite Bereich in einem äußeren Bereich des Wasserstoffspeichers.

10. Wasserstoffspeicher nach einem der Ansprüche 1 bis 9, **dadurch gekennzeichnet, dass** dieser ein Niedertemperaturhydrid und/oder ein Hochtemperaturhydrid als hydrierbares Material aufweist, wobei Niedertemperaturhydride Wasserstoff in einem Temperaturbereich zwischen -55°C bis 180°C und Hochtemperaturhydride Wasserstoff in einem Temperaturbereich ab 280 °C speichern.

11. Verfahren zur Herstellung eines Wasserstoffspeichers nach einem der Ansprüche 1 bis 10, wobei ein erster Bereich des Wasserstoffspeichers mittels einer Matrix umfassend wenigstens ein Polymer gebildet wird, in die ein hydrierbares Material eingebettet wird, und ein zweiter Bereich des Wasserstoffspeichers mittels ein oder mehrerer Schichten gebildet wird, wobei zur Herstellung einer Schicht, vorzugsweise im Wesentlichen ein einzelnes Material oder eine homogenisierte Materialmischung verwendet wird; wobei der erste und der zweite Bereich miteinander bei Drücken von 500 bis 6000 bar miteinander verpresst werden und einen Verbundbereich bilden.

12. Verfahren nach Anspruch 11, **dadurch gekennzeichnet, dass** der erste und der zweite Bereich jeweils unabhängig voneinander gefertigt werden und anschließend beide Bereiche zusammengesetzt werden.

13. Verfahren nach Anspruch 11, **dadurch gekennzeichnet, dass** zuerst einer der beiden ersten und zweiten Bereiche hergestellt wird und anschließend der andere Bereich unter Einbeziehung des schon hergestellten Bereichs hergestellt wird.

## Claims

1. Hydrogen storage means comprising a composite material comprising a hydrogenatable material, wherein the composite material comprises, in a first region, at least one matrix comprising at least one polymer into which the hydrogenatable material is embedded, and comprises, in another, second region, one or more layers, wherein at least one of the layers has one of the following principal functions: hydrogen storage, heat conduction or gas conduction; wherein the first and second region are compressed together at pressures from 500 to 6000 bar and form a composite region.

2. Hydrogen storage means as claimed in claim 1, **characterized in that** the matrix further comprises carbon, the matrix and/or a layer preferably comprising a mixture of various carbon polymorphs including expanded natural graphite as one of the carbon polymorphs.

3. Hydrogen storage means as claimed in claim 1 or 2, **characterized in that** the second region comprises at least one layer comprising a heat-conducting material, especially carbon and/or a heat-conducting metal, especially aluminum.

4. Hydrogen storage means as claimed in any of claims 1 to 3, **characterized in that** the heat-conducting material comprises a metal or a metal alloy, preferably aluminum and/or copper and/or alloys thereof.

5. Hydrogen storage means as claimed in any of claims 2 to 4, **characterized in that** the carbon takes the form of natural expanded graphite.

6. Hydrogen storage means as claimed in any of claims 1 to 5, **characterized in that** the polymer has a density in the range from 0.7 g/cm³ to 1.3 g/cm³, especially from 0.8 g/cm³ to 1.25 g/cm³.

7. Hydrogen storage means as claimed in any of claims 1 to 6, **characterized in that** the polymer has a tensile strength in the range from 10 MPa to 100 MPa, especially from 15 MPa to 90 MPa.

8. Hydrogen storage means as claimed in any of claims 1 to 7, **characterized in that** the polymer is selected from the group comprising EVA, PMMA, EEAMA and mixtures of these polymers.

9. Hydrogen storage means as claimed in any of claims 1 to 8, **characterized in that** it has alternating first and second regions comprising a matrix on the one hand and comprising one or more layers on the other hand and/or the first region is arranged in an inner region of the hydrogen storage means and the second region in an outer region of the hydrogen storage means.

10. Hydrogen storage means as claimed in any of claims 1 to 9, **characterized in that** it comprises a low-temperature hydride and/or a high-temperature hydride as hydrogenatable material, wherein low-temperature hydrides store hydrogen within a temperature range between -55°C and 180°C and high-temperature hydrides in a temperature range of 280°C upward.

11. Process for producing a hydrogen storage means as claimed in any of claims 1 to 10, wherein a first region of the hydrogen storage means is formed by means of a matrix comprising at least one polymer into which a hydrogenatable material is embedded, and a second region of the hydrogen storage means is formed by means of one or more layers, wherein a layer is produced using preferably essentially a single material or a homogenized material mixture; wherein the first and second region are compressed together at pressures from 500 to 6000 bar and form a composite region .

12. Process as claimed in claim 11, **characterized in that** the first and second regions are each manufactured independently of the other and then the two regions are combined.

13. The process as claimed in claim 11, **characterized in that** first one of the two first and second regions is produced and then the other region is produced with inclusion of the region already produced.

## Revendications

1. Accumulateur d'hydrogène comportant un matériau composite pourvu d'un matériau hydrogénable, le matériau composite présentant dans une première zone au moins une matrice comprenant au moins un polymère, dans laquelle le matériau hydrogénable est incorporé et, dans une autre seconde zone présente une ou plusieurs couches, au moins l'une des couches présentant l'une des fonctions suivantes en tant que fonction principale dans la seconde zone du matériau composite : stockage de l'hydrogène, conduction de chaleur ou passage de gaz ; la première et la seconde zone étant compressées l'une contre l'autre sous des pressions de 500 à 6 000 bar et formant une zone composite.

2. Accumulateur d'hydrogène selon la revendication 1, **caractérisé en ce que** la matrice comprend en outre du carbone, de préférence la matrice et/ou une couche comprend un mélange de différentes modifications du carbone, comprenant le graphite naturel expansé, représentant l'une des modifications du carbone.

3. Accumulateur d'hydrogène selon la revendication 1 ou 2, **caractérisé en ce que** la seconde zone comprend au moins une couche qui comprend un matériau conducteur de la chaleur, en particulier du carbone et/ou un métal conducteur de la chaleur, en particulier l'aluminium.

4. Accumulateur d'hydrogène selon l'une des revendications 1 à 3, **caractérisé en ce que** le matériau conducteur de la chaleur comprend un métal ou un alliage métallique, de préférence comprend de l'aluminium et/ou du cuivre et/ou des alliages de celui-ci.

5. Accumulateur d'hydrogène selon l'une des revendications 2 à 4, **caractérisé en ce que** le carbone se présente sous forme de graphite naturel expansé.

6. Accumulateur d'hydrogène selon l'une des revendications 1 à 5, **caractérisé en ce que** le polymère présente une masse volumique dans la plage de 0,7 g/cm³ à 1,3 g/cm³, en particulier de 0,8 g/cm³ à 1,25 g/cm³.

7. Accumulateur d'hydrogène selon l'une des revendications 1 à 6, **caractérisé en ce que** le polymère présente une résistance à la traction dans la plage de 10 MPa à 100 MPa, en particulier de 15 MPa à 90 MPa.

8. Accumulateur d'hydrogène selon l'une des revendications 1 à 7, **caractérisé en ce que** le polymère est choisi dans le groupe comprenant l'EVA, le PMMA et l'EEAMA, ainsi que les mélanges de ces polymères.

9. Accumulateur d'hydrogène selon l'une des revendications 1 à 8, **caractérisé en ce qu'**il possède une première et une seconde zone alternées, avec une matrice d'une part et avec une ou plusieurs couches d'autre part, et/ou que la première zone est disposée dans une zone interne de l'accumulateur d'hydrogène et la seconde zone dans une zone extérieure de l'accumulateur d'hydrogène.

10. Accumulateur d'hydrogène selon l'une des revendications 1 à 9, **caractérisé en ce qu'**il comprend un hydrure à basse température et/ou un hydrure à haute température servant de matériau hydrogénable, les hydrures à basse température stockant l'hydrogène dans la plage de températures entre - 55 °C et 180 °C et les hydrures à haute température de l'hydrogène dans la plage de températures à partir de 280 °C.

11. Procédé de fabrication d'un accumulateur d'hydrogène selon l'une des revendications 1 à 10, dans lequel on forme une première zone de l'accumulateur d'hydrogène à l'aide d'une matrice comprenant au moins un polymère, dans laquelle un matériau hydrogénable est incorporé, et on forme une seconde zone de l'accumulateur d'hydrogène à l'aide d'une ou plusieurs couches, auquel cas, pour fabriquer une couche, on utilise de préférence pour l'essentiel un matériau unique ou un mélange de matériaux homogénéisé ; la première et la seconde zones étant compressées l'une contre l'autre sous des pressions de 500 à 6 000 bar et formant une zone composite.

12. Procédé selon la revendication 11, **caractérisé en ce que** la première et la seconde zone sont chacune fabriquées indépendamment l'une de l'autre, puis les deux zones sont réunies.

13. Procédé selon la revendication 11, **caractérisé en ce qu'**on fabrique d'abord l'une des deux première et seconde zone, puis on fabrique l'autre zone en intégrant la zone déjà fabriquée.
